# EUROPÄISCHE PATENTSCHRIFT

(11) **EP 3 173 007 B1**
(45) Veröffentlichungstag und Bekanntmachung des Hinweises auf die Patenterteilung: **31.01.2018**
(21) Anmeldenummer: 16199477.7
(22) Anmeldetag: 18.11.2016
(51) Int. Cl.: A47L 15/44, D06F 39/02

(54) **DOSIERGERÄT**
METERING DEVICE
APPAREIL DE DOSAGE

(30) Priorität: 25.11.2015 DE 102015120400
(43) Veröffentlichungstag der Anmeldung: 31.05.2017
(73) Patentinhaber: Miele & Cie. KG, 33332 Gütersloh (DE)
(72) Erfinder: Wegener, Dirk, 33649 Bielefeld (DE); Hils, Fabian, 33129 Delbrück (DE); Scharte, Florian, 33428 Harsewinkel (DE); Kröger, Günter, 32369 Rahden (DE); Nitsche, Peter, 92339 Beilngries (DE); Spießl, Georg, 92431 Altendorf (DE); Bauer, Matthias, 92546 Schmidgaden (DE)

(56) Entgegenhaltungen:
- DE-A1-102013 104 391
- US-A- 4 141 311

## Beschreibung

Die Erfindung betrifft ein Dosiergerät für das dosierte Einbringen eines schüttfähigen Reinigungsmittels in einen Behandlungsraum eines programmgesteuerten Reinigungsgeräts, insbesondere einer Geschirrspülmaschine, mit einem eine Beschickungsöffnung aufweisenden Gehäuse, einer im Gehäuse verdrehbar angeordneten und über die Beschickungsöffnung zugänglichen Trageinheit, die der auswechselbaren Aufnahme eines für die Beherbergung des Reinigungsmittels vorgesehenen Vorratsbehälters dient, und mit einem Gehäusedeckel zum fluiddichten Verschließen der Beschickungsöffnung.

Programmgesteuerte Reinigungsgeräte im Allgemeinen sowie Geschirrspülmaschinen im Speziellen sind aus dem Stand der Technik an sich gut bekannt, weshalb es eines gesonderten druckschriftlichen Nachweises an dieser Stelle nicht bedarf.

Reinigungsgeräte der in Rede stehenden Art verfügen typischerweise über einen Spülbehälter, der einen Behandlungsraum, auch Spülraum genannt, bereitstellt. Dieser Behandlungsraum ist verwenderseitig über eine Beladeöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich im Falle einer Geschirrspülmaschine beispielsweise um Geschirr, Besteckteile und/oder dergleichen handeln kann.

Zur Beaufschlagung von zu reinigendem Spülgut mit Spülflüssigkeit, der sogenannten Spülflotte, verfügt das Reinigungsgerät im Inneren des Spülbehälters über eine Sprüheinrichtung. Diese Sprüheinrichtung stellt in aller Regel verdrehbar gelagerte Sprüharme zur Verfügung, wobei typischerweise zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Zur Erzielung eines optimierten Reinigungsergebnisses finden Prozesschemikalien Verwendung, die während eines Reinigungsvorgangs dem Spülraum zugeführt werden, typischerweise als Zugabe zur Spülflotte. Bei solchen Prozesschemikalien handelt es sich beispielsweise um Reinigungsmittel, die dem Spülraum des Reinigungsgeräts programmgesteuert zu einer bestimmten Zeit des Programmablaufs zugegeben werden.

Aus dem Stand der Technik sind Reinigungsmittel in flüssiger und fester Form bekannt. Dabei können feste Reinigungsmittel in schüttfähiger Pulverform oder als sogenannte Tabs, das heißt in Tablettenform vorliegen. Die Praxis hat indes gezeigt, dass sich mit schüttfähigem Reinigungsmittel in Pulverform die vergleichsweise besten Reinigungsergebnisse erzielen lassen.

Bei der Verwendung von schüttfähigem Reinigungsmittel in Pulverform ist vor jedem Start eines Reinigungsprogamms verwenderseitig von Hand eine Reinigungsmitteldosierung vorzunehmen. Ein Reinigungsgerät verfügt zu diesem Zweck typischerweise türinnenseitig über einen Vorratsbehälter, der mit einer manuell zu bestimmenden Menge an Reinigungsmittel zu bestücken ist. Während eines Programmablaufs öffnet sich dieser Vorratsbehälter zu einem bestimmten Zeitpunkt des Spülprogramms und das vom Vorratsbehälter bevorratete Reinigungsmittel kann von der im Spülraum des Reinigungsgeräts befindlichen Spülflotte ausgeschwemmt werden.

Um eine Reinigungsmittelbevorratung für eine Mehrzahl von Spülprogrammen vornehmen zu können, so dass nicht vor Beginn eines jeden Spülprogramms eine manuelle Reinigungsmitteldosierung stattzufinden hat, sind Dosiergeräte vorgeschlagen worden, so zum Beispiel mit der DE 10 2013 104 391 A1, die ein gattungsgemäßen Dosiergerät betrifft.

Das vorbekannte Dosiergerät verfügt über einen auswechselbar angeordneten Vorratsbehälter, der der Bevorratung von Reinigungsmittel in einer Menge dient, die für eine Mehrzahl von Spülprogrammen ausreichend ist. Der Vorratsbehälter ist innerhalb eines Gehäuses um eine Drehachse verdrehbar gelagert, wobei im bestimmungsgemäßen Dosierfall programmgesteuert eine Verdrehbewegung des Vorratsbehälters bewirkt wird. Zu diesem Zweck ist eine motorgetriebene Antriebseinrichtung vorgesehen, mittels welcher im Betriebsfall eine Verdrehbewegung des Vorratsbehälters vorgenommen wird. Die motorgetriebene Antriebseinrichtung wirkt dabei mit einer Trageinheit zusammen, die den Vorratsbehälter auswechselbar aufnimmt.

Zur Beschickung der vom Gehäuse bereitgestellten Trageinheit mit einem Vorratsbehälter ist das Gehäuse mit einer Beschickungsöffnung ausgerüstet. Verwenderseitig ist über die Beschickungsöffnung die Trageinheit zwecks auswechselbarer Anordnung eines Vorratsbehälters zugänglich.

Zwecks fluiddichtem Verschließen der Beschickungsöffnung im Betriebsfall verfügt das Gehäuse über einen Gehäusedeckel, der beispielsweise verschwenkbar am Gehäuse angeordnet und aus einer Verschlussstellung in eine Offenstellung und umgekehrt verschwenkt werden kann. Sofern sich der Gehäusedeckel in einer Offenstellung befindet, ist verwenderseitig ein Zugriff auf den von der Trageinheit des Dosiergeräts aufgenommenen Vorratsbehälters möglich.

Zum Zwecke der Reinigungsmittelabgabe verfügt der Vorratsbehälter über einen Reinigungsmittelauslass in Form einer Öffnung. Über diese wird im Betriebsfall portionsweise Reinigungsmittel abgegeben. Dabei erfolgt eine solche Reinigungsmittelabgabe infolge einer Verdrehbewegung des Vorratsbehälters. Je 360°-Umdrehung des Vorratsbehälters wird eine stets gleiche Portionsmenge an Reinigungsmittel dem Reinigungsmittelauslass zugeführt, und von dort aus unter Zwischenschaltung eines Kanalsystems in den Spülraum des Reinigungsgeräts abgegeben.

Dosiergeräte der vorbeschriebenen Art haben sich im alltäglichen Praxiseinsatz bewährt. Es besteht gleichwohl Verbesserungsbedarf, insbesondere mit Blick auf eine gesteigerte Betriebssicherheit. Es ist deshalb die **Aufgabe** der Erfindung, ein Dosiergerät der eingangs genannten Art dahingehend weiterzuentwickeln, dass konstruktionsbedingt eine gesteigerte Betriebssicherheit gegeben ist.

Zur **Lösung** dieser Aufgabe wird mit der Erfindung ein Dosiergerät der eingangs genannten Art vorgeschlagen, das sich dadurch auszeichnet, dass der Gehäusedeckel ein das fluiddichte Verschließen der Beschickungsöffnung besorgendes Deckelteil und ein bewegbar am Deckelteil angeordnetes Verschlussteil aufweist, wobei das Verschlussteil mit einer Mehrzahl von Verschlusselementen ausgerüstet ist, die jeweils mit einem am Gehäuse angeordneten Verschlussnocken zusammenwirken.

Das erfindungsgemäße Dosiergerät verfügt in Abkehr zum Stand der Technik nicht über eine einstückig ausgebildete Gehäuseklappe. Es ist vielmehr ein Gehäusedeckel vorgesehen, der zweiteilig ausgebildet ist, wobei der eine Teil, nämlich der Deckelteil dem eigentlichen fluiddichten Verschließen dient, wohingegen der andere Teil, nämlich der Verschlussteil dazu dient, das Deckelteil in seiner Dichtstellung Lage zu fixieren und zu halten. Im Ergebnis dieser Konstruktion steht ein sicherer Verschluss der Beschickungsöffnung, so dass ein ungewolltes Eindringen von Feuchtigkeit in das Gehäuse vermieden ist. Die Betriebssicherheit wird damit in vorteilhafter Weise erhöht.

Das Verschlussteil verfügt erfindungsgemäß über eine Mehrzahl von Verschlusselementen. Am Gehäuse sind hierzu korrespondierend ausgebildete Verschlussnocken angeordnet, wobei die Verschlusselemente mit den Verschlussnocken bei geschlossenem Gehäusedeckel zusammenwirken. Aufgrund des Umstandes, dass eine Mehrzahl von Verschlusselementen einerseits und Verschlussnocken andererseits vorgesehen sind, wird ein Mehrpunkt-Verschlusskontakt zwischen dem Gehäusedeckel und dem Gehäuse erreicht. Es sind bevorzugterweise sechs oder mehr, beispielsweise acht solcher Verschlusselemente sowie entsprechend viele Verschlussnocken vorgesehen. Damit wird ein dauerhaft sicheres und fluiddichtes Anliegen des Deckelteils am Gehäuse im Verschlussfall bewerkstelligt.

Der Gehäusedeckel ist gemäß einem weiteren Merkmal der Erfindung scharniert ausgebildet. Mittels der Scharnierung ist der Gehäusedeckel verschwenkbar bevorzugterweise am Gehäuse angeordnet, so dass verwenderseitig durch einfaches Verschwenken des Gehäusedeckels ein Zugriff auf die Beschickungsöffnung möglich ist. Um die Beschickungsöffnung wieder zu schließen, ist der Gehäusedeckel zurück in seine Verschlussstellung zu verschwenken, wobei ein fluiddichtes Verschließen der Beschickungsöffnung durch das Deckelteil erst dann erreicht ist, wenn die vom Verschlussteil bereitgestellten Verschlusselemente in Wirkkontakt mit den vom Gehäuse bereitgestellten Verschlussnocken gebracht sind. Der Gehäusedeckel kann sich mithin entweder in Offenstellung oder in Verschlussstellung befinden, wobei sich das Verschlussteil des Gehäusedeckels in Verschlussstellung des Gehäusedeckels entweder in verriegelter oder entriegelter Stellung befinden kann. Im Falle der verriegelten Stellung dichtet der Gehäusedeckel die Beschickungsöffnung fluiddicht ab. In entriegelter Stellung des Verschlussteils ist ein verwenderseitiges Überführen des Gehäusedeckels aus der Verschlussstellung in seine Offenstellung ermöglicht.

Gemäß einem weiteren Merkmal der Erfindung ist das Deckelteil kreisförmig ausgebildet.

Es verfügt mithin über eine zur Beschickungsöffnung korrespondierend ausgebildete Geometrie. In Verschlussstellung des Gehäusedeckels liegt das Deckelteil randseitig auf der Beschickungsöffnung auf.

Das Verschlussteil ist bevorzugterweise verdrehbar am Deckelteil angeordnet. Eine verwenderseitige Betätigung des Verschlussteils erfolgt mithin durch Verdrehung relativ zum Deckelteil.

Das Verschlussteil ist gemäß einem weiteren Merkmal der Erfindung ringförmig ausgebildet. Eine Verdrehbewegung zwecks Verriegelung beziehungsweise Entriegelung des Verschlussteils erfolgt in diesem Fall um eine Hochachse des ringförmigen Verschlussteils, was eine besonders einfache Handhabung für den Verwender ermöglicht.

Gemäß einem weiteren Merkmal der Erfindung ist vorgesehen, dass das Verschlussteil das Deckelteil ringartig umschießt. Das kreisförmig ausgebildete Deckelteil trägt mithin das Verschlussteil randseitig, wobei das Verschlussteil aufgrund seiner ringartigen Ausgestaltung das Deckelteil umschießt. Für eine Führung des Verschlussteils relativ gegenüber dem Deckelteil ist bevorzugterweise eine Feder-Nut-Anordnung vorgesehen, so dass das ringartige Verschlussteil in einer Ebene mit dem Deckelteil liegend um dieses herum verdreht werden kann.

Es ist gemäß einem weiteren Merkmal der Erfindung vorgesehen, dass das Deckelteil zumindest bereichsweise transparent oder semitransparent ausgebildet ist. Dies gestattet es einem Verwender, durch das Deckelteil und die Beschickungsöffnung hindurch in das Dosiergerät hineinsehen zu können, insbesondere um auf diese Weise kontrollieren zu können, ob und gegebenenfalls inwieweit der vom Gehäuse des Dosiergeräts aufgenommene Vorratsbehälter noch mit einer hinreichenden Menge an Reinigungsmittel befüllt ist.

Gemäß einem weiteren Merkmal der Erfindung ist vorgesehen, dass das Deckelteil aus Kunststoff besteht. Anstelle von Kunststoff wäre auch Glas denkbar, doch es ist Kunststoff aufgrund seines geringeren Gewichtes bevorzugt.

Es ist gemäß einem weiteren Merkmal der Erfindung vorgesehen, dass das Deckelteil mit einer am Gehäuse angeordneten Dichtung zusammenwirkt. Alternativ wäre die Anordnung einer Dichtung auch am Deckelteil möglich. Von besonderem Vorteil der erfindungsgemäßen Ausgestaltung ist in diesem Zusammenhang, dass das Deckelteil bei einer Überführung des Verschlussteils aus einer verriegelten Stellung in eine entriegelte Stellung oder umgekehrt relativ gegenüber der Dichtung feststeht. Es erfolgt insbesondere keine Relativbewegung zwischen Dichtung und Deckelteil, so dass die Dichtung bei einer Entriegelung beziehungsweise Verriegelung des Gehäusedeckels nicht mechanisch durch ein sich bewegendes Verschlussteil belastet wird. Insoweit gestattet die erfindungsgemäße Ausgestaltung eine lange Lebensdauer der Dichtung.

Es ist gemäß einem weiteren Merkmal der Erfindung vorgesehen, dass zumindest eine der Verschlusselement-Verschlussnocken-Anordnungen eine Bajonettverschluss ausbildet. Dadurch wird einerseits bewerkstelligt, dass bei einer Überführung des Verschlussteils aus einer entriegelten Stellung in eine verriegelte Stellung das Deckelteil an die Dichtung angepresst wird, was ein sicheres fluiddichtes Anliegen des Deckelteils bewerkstelligt. Zum anderen wird durch die Bajonettverschluss-Ausgestaltung erreicht, dass ein unbeabsichtigtes Lösen des Verschlussteils durch einfaches Zurückdrehen infolge von beispielsweise im Betriebsfall auftretenden Erschütterungen vermieden ist. Damit erweist sich die erfindungsgemäße Ausgestaltung als besonders sicher in der Handhabung.

Die erfindungsgemäße Ausgestaltung zeichnet sich insgesamt dadurch aus, dass ein Gehäusedeckeldichtungssystem vorgesehen ist, das über ein am Deckelteil verliersicher angebrachtes Verschlussteil in Form eines Rings verfügt, wobei der Bajonettring wenigstens sechs, vorzugsweise acht Verriegelungsabschnitte aufweist, zu welchem Zweck Verschlusselemente vorgesehen sind, die in Verbindung mit entsprechenden Haltenocken am Gehäuse stehen. Die Schließkräfte sind dabei recht gering, da im Unterschied beispielsweise zu einem Schraubdeckel keine Reibungskräfte zwischen Deckelteil und Dichtung auftreten. Ein Anziehen des Deckelteils an die Dichtung wird durch eine spezielle Einführungsgeometrie zwischen Verschlusselementen und Verschlussnocken in der Ausgestaltung eines Bajonettverschlusses sichergestellt. Durch die Vorzugsweise sechs bis acht Bajonettverrastungen kann dauerhaft einer Verformung des Gehäusedeckels über Temperatur und Alterung entgegengewirkt werden, was eine Abdichtung des Gesamtsystems dauerhaft sicherstellt.

Zum Öffnen des Gehäusedeckels hat der Verwender den Bajonettring um beispielsweise 10° zu verdrehen, was zu einer Entriegelung führt. Alsdann ist der Gehäusedeckel, das heißt das Deckelteil mit dem daran angeordneten Verschlussteil um die Scharnierachse rotatorisch zu verschwenken. Das als Bajonettring ausgebildete Verschlussteil verbleibt dauerhaft am Deckelteil und kann somit nicht verloren gehen, auch dann nicht, wenn sich der Gehäusedeckel in Offenstellung befindet. Ein Schließen des Gehäusedeckels erfolgt in umgekehrter Reihenfolge, indem der Gehäusedeckel aus einer Offenstellung in eine Verschlussstellung gebracht und alsdann das Verschlussteil in seine verriegelte Stellung verdreht wird. Die entriegelte beziehungsweise verriegelte Stellung wird dem Verwender bevorzugterweise über eine entsprechende Symbolik angezeigt, die auf dem Verschlussteil und/oder dem Deckelteil angebracht ist.

Weitere Merkmale und Vorteile der Erfindung ergeben sich aus der nachfolgenden Beschreibung anhand der Figuren. Dabei zeigen:
- Fig. 1: in schematischer Ansicht die Innenseite einer Spülraumtür einer Geschirrspülmaschine;
- Fig. 2: in schematisch perspektivischer Ansicht von oben ausschnittsweise ein Dosiergerät nach der Erfindung mit einem Gehäusedeckel in einer ersten Stellung;
- Fig. 3: in schematisch perspektivischer Ansicht ausschnittsweise das Dosiergerät nach Fig. 2 mit einem Gehäusedeckel in einer zweiten Stellung;
- Fig. 4: in schematischer Draufsicht von oben ausschnittsweise ein Dosiergerät nach der Erfindung mit einem verriegelten Gehäusedeckel;
- Fig. 5: in schematischer Draufsicht von oben ausschnittsweise ein Dosiergerät nach der Erfindung mit einem entriegelten Gehäusedeckel;
- Fig. 6: in schematisch perspektivischer Ansicht ausschnittsweise ein Dosiergerät nach Fig. 2 ohne Gehäusedeckel;
- Fig. 7: in schematisch perspektivischer Ansicht ausschnittsweise ein Dosiergerät nach der Erfindung mit entriegeltem Gehäusedeckel;
- Fig. 8: in schematisch perspektivischer Ansicht ausschnittsweise ein Dosiergerät nach der Erfindung mit verriegeltem Gehäusedeckel;
- Fig. 9: in schematischer Schnittdarstellung ausschnittsweise ein Dosiergerät nach der Erfindung;
- Fig. 10: in schematischer Schnittdarstellung ausschnittsweise ein Dosiergerät nach der Erfindung gemäß einem weiteren Ausführungsbeispiel;

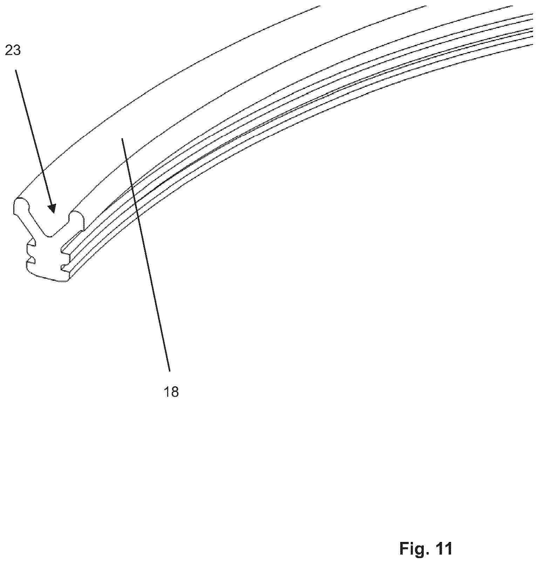

- Fig. 11: in schematischer Schnittdarstellung ausschnittsweise eine Einzeldarstellung der in Fig. 10 gezeigten Dichtung;
- Fig. 12: in schematischer Seitenansicht ein Reinigungsgerät.

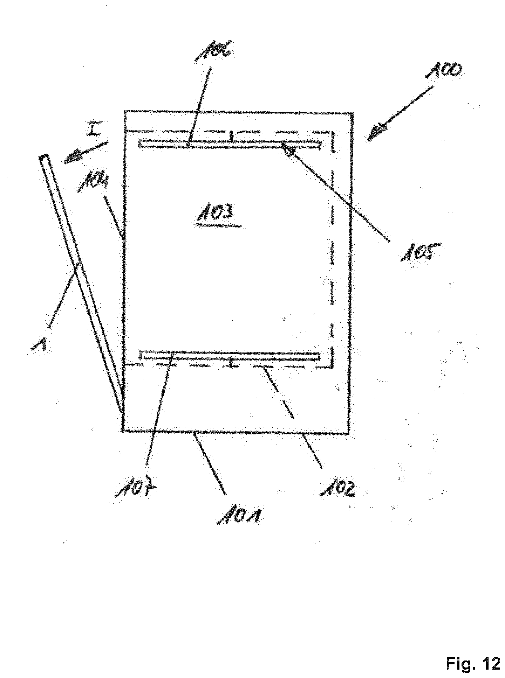

Fig. 12 lässt in rein schematischer Darstellung ein Reinigungsgerät in der Ausgestaltung einer Geschirrspülmaschine 100 erkennen.

Die Geschirrspülmaschine 100 verfügt in an sich bekannter Weise über ein Gehäuse 101, das einen Spülbehälter 102 aufnimmt. Der Spülbehälter 102 stellt seinerseits einen Behandlungsraum - auch Spülraum 103 genannt - zur Aufnahme von zu reinigendem Spülgut bereit. Zur Beschickung des Spülraums 103 mit zu reinigendem Spülgut verfügt der Spülbehälter 102 über eine Beladungsöffnung 104. Diese ist mittels einer Spülraumtür 1 fluiddicht verschließbar, wobei die Spülraumtür 1 um eine horizontal verlaufende Schwenkachse drehverschwenkbar gelagert ist.

Im bestimmungsgemäßen Verwendungsfall erfolgt eine Beaufschlagung des zu reinigenden Spülguts mit Spülflotte, zu welchem Zweck die Geschirrspülmaschine 100 über eine Sprüheinrichtung 105 verfügt. Im gezeigten Ausführungsbeispiel gehören zur Sprüheinrichtung 105 ein oberer Sprüharm 106 sowie ein unterer Sprüharm 107.

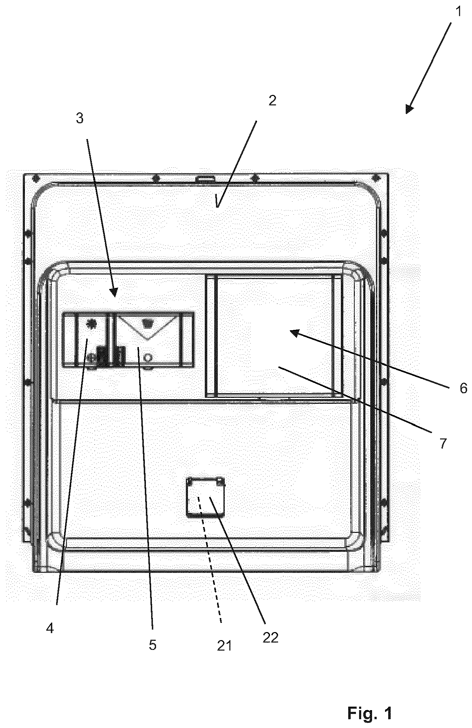

Fig. 1 lässt die Spülraumtür 1 in einer Draufsicht erkennen, und zwar die Innenansicht gemäß Blickrichtung I nach Fig. 12.

Wie Fig. 1 zu entnehmen ist, verfügt die Spülraumtür 1 innenseitig über ein aus dem Stand der Technik an sich bekanntes Kombinationsgerät 3, das seinerseits über eine Klarspülmittelbevorratung 4 sowie andererseits über einen Vorratsbehälter 5 verfügt, der je Spülprogramm verwenderseitig manuell mit Reinigungsmittel aufzufüllen ist.

Die Geschirrspülmaschine 100 verfügt neben dem aus dem Stand der Technik an sich bekannten Kombinationsgerät 3 ferner über ein Dosiergerät 6, das ebenso wie das Kombinationsgerät 3 auf der Innenseite 2 der Spülraumtür 1 angeordnet ist. Bei geschlossener Spülraumtür 1 befindet sich der Gehäusedeckel 7 des Dosiergeräts 6 in Verschlussstellung, wie dies in Fig. 1 gezeigt ist.

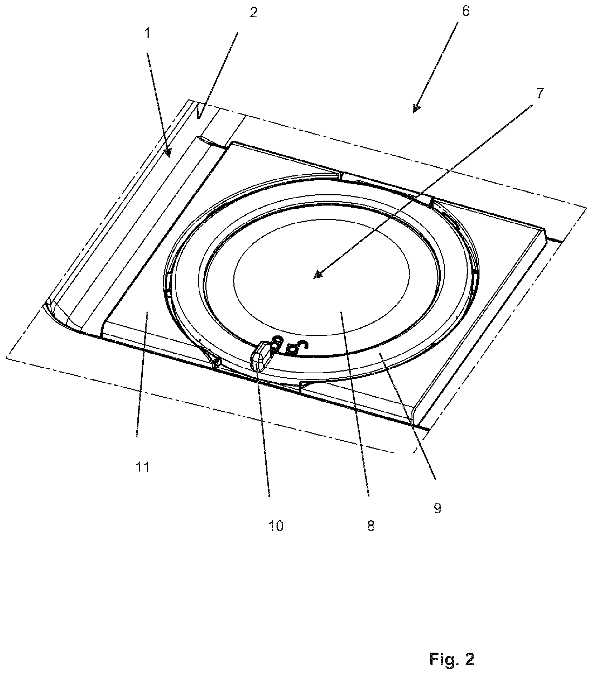

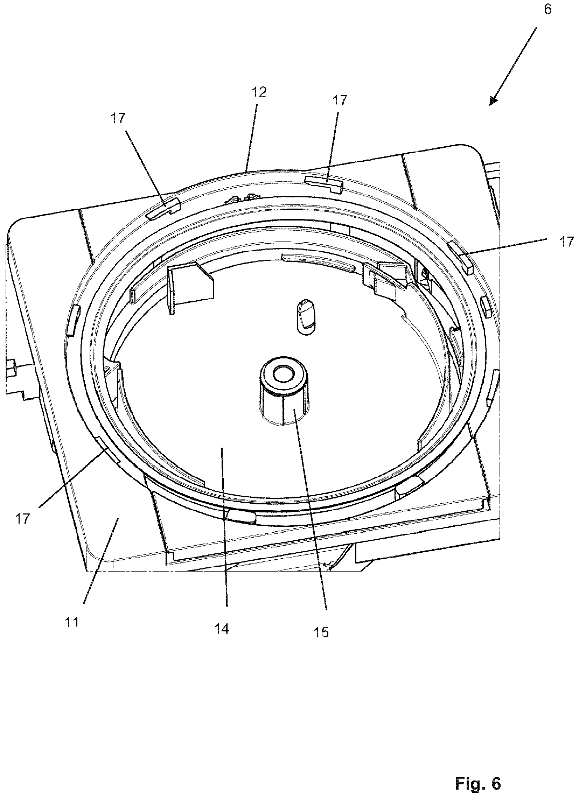

Wie dies insbesondere eine Zusammenschau der Figuren 2 und 6 zeigt, verfügt das Dosiergerät 6 über ein Gehäuse 11. Dieses ist über eine Beschickungsöffnung 12 zugänglich, die mittels des Gehäusedeckels 7 fluiddicht verschließbar ist.

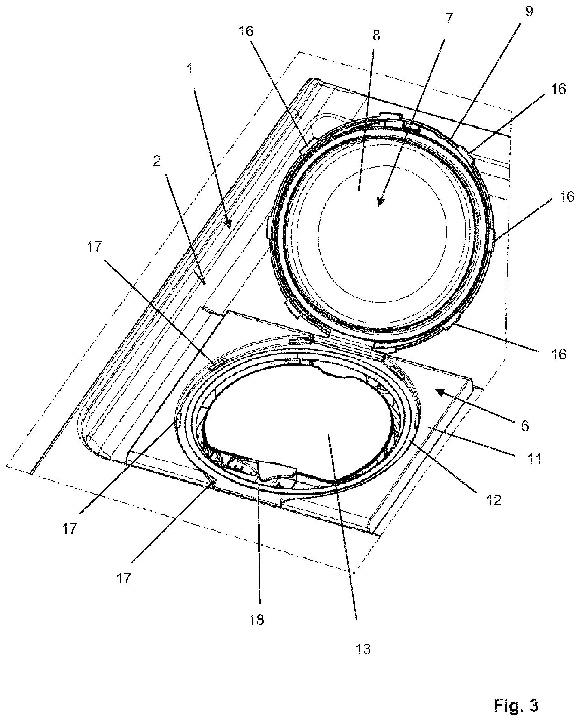

Das Gehäuse 11 beherbergt eine verdrehbar angeordnete Trageinheit 14, die im Verdrehfall um eine vom Achsfortsatz 15 bereitgestellte Drehachse verdreht. Die Trageinheit 14 dient der Aufnahme eines mit Reinigungsmittel bestückten Vorratsbehälters 13, wie sich dies aus der Darstellung nach Fig. 3 ergibt.

Wie sich aus Fig. 3 ferner ergibt, ist ein verwenderseitiger Zugriff durch die Beschickungsöffnung 12 auf den Vorratsbehälter 13 nur dann möglich, wenn sich - wie in Fig. 3 gezeigt - der Gehäusedeckel 7 in seiner Offenstellung befindet. In Verschlussstellung des Gehäusedeckels 7, wie dieser beispielsweise in Fig. 2 gezeigt ist, ist ein verwenderseitiger Zugriff auf den von der Trageinheit 14 aufgenommenen Vorratsbehälter 13 nicht möglich.

Im bestimmungsgemäßen Dosierfall gelangt Reinigungsmittel aus dem Vorratsbehälter 13 in den Spülraum 103 der Geschirrspülmaschine 100, zu welchem Zweck auf der Innenseite der Spülraumtür ein Dosierauslass 21 vorgesehen ist, wie sich dies aus der Darstellung nach Fig. 1 ergibt. Dieser Dosierauslass 21 ist mit einer Abdeckung 22 oder einem verschwenkbar angeordneten Deckel ausgerüstet.

Der Vorratsbehälter 13 ist in die Trageinheit 14 des Dosiergeräts 6 verwenderseitig auswechselbar einsetzbar. Die Trageinheit 14 nimmt den Vorratsbehälter 13 verdrehfest auf, so dass bei einer motorgetriebenen Verdrehbewegung der Trageinheit 14 auch der davon aufgenommene Vorratsbehälter 13 mit verdreht, und zwar um die durch den Achsfortsatz 15 definierte Drehachse.

Zwecks portionsweisem Eindosieren von Reinigungsmittel in den Spülraum 103 der Geschirrspülmaschine 100 ist eine Dosierkammer vorgesehen, die entweder als Teil des Gehäuses 11 oder als Teil des Vorratsbehälters 13 ausgebildet sein kann. Die Dosierkammer ist zweigeteilt ausgebildet und verfügt über einen ersten Teilbereich, den sogenannten Dosierraum, sowie über einen zweiten Teilbereich, den sogenannten Dosierkanal. Dieser mündet in eine Dosieröffnung, die in strömungstechnischer Verbindung mit dem Dosierauslass 21 steht.

Der Dosierraum und der Dosierkanal stehen in strömungstechnischer Verbindung, wobei die strömungstechnische Verbindung mittels einer Dosierbarriere verengt ist, so dass eine insgesamt labyrinthförmig ausgebildete Dosierkammer entsteht.

Bei einem in die Trageinheit 14 eingesetzten Vorratsbehälter 13 ergibt sich im bestimmungsgemäßen Verwendungsfall ein Dosiergang wie folgt. Der Vorratsbehälter 13 wird mittels der motorangetriebenen Trageinheit 14 um die durch den Achsfortsatz 15 definierte Drehachse verdreht, und zwar um 360°. Infolge dieser Verdrehbewegung wird vom Vorratsbehälter 13 bevorratetes Reinigungsmittel in die Dosierkammer gefördert, wobei aufgrund der Dosierbarriere nur eine Befüllung des Dosierraums, mithin nur eine Teilbefüllung der Dosierkammer stattfindet. Die Dosierbarriere gewährleistet jedenfalls, dass der Dosierkanal zunächst reinigungsmittelfrei bleibt. Dabei bestimmt das von dem Dosierraum bereitgestellte Volumen die Menge an portioniertem Reinigungsmittel.

Im Zuge der weiteren Verdrehbewegung gelangt der Vorratsbehälter in eine solche Stellung, dass die Überführungsöffnung zur Dosierkammer oberhalb des Schüttspiegels des vom Vorratsbehälter bevorrateten Reinigungsmittels liegt, so dass ein weiteres Nachströmen von Reinigungsmittel in den Dosierraum der Dosierkammer nicht weiter stattfindet. In dieser Verdrehstellung des Vorratsbehälters 13 kann das in den Dosierraum zuvor eindosierte Reinigungsmittel an der Dosierbarriere vorbei in den Dosierkanal strömen. Von dort aus gelangt es dann über die dosierkammerseitige Dosieröffnung in den Spülraum 103.

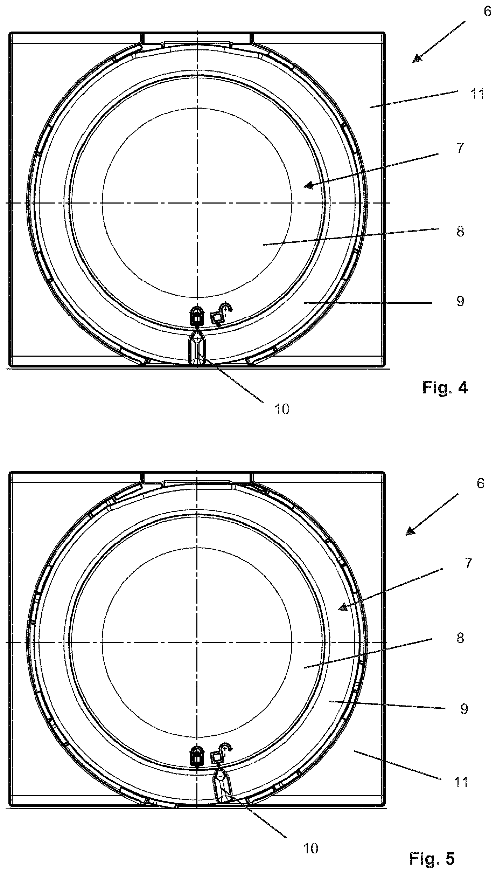

Um einen ungewollten Flüssigkeitseintrag in das Dosiergerät 6 und insbesondere in das vom Vorratsbehälter bevorratete Reinigungsmittel sicher zu unterbinden, dient der Gehäusedeckel 7 einem fluiddichten Verschluss der Beschickungsöffnung 12. Erfindungsgemäß ist zu diesem Zweck vorgesehen, dass der Gehäusedeckel 7 ein das fluiddichte Verschließen der Beschickungsöffnung 12 besorgendes Deckelteil 8 und ein bewegbar am Deckelteil 8 angeordnetes Verschlussteil 9 aufweist, wobei das Verschlussteil 9 mit einer Mehrzahl von Verschlusselementen 16 ausgerüstet ist, die jeweils mit einem am Gehäuse 11 angeordneten Verschlussnocken 17 zusammenwirken. Dieser Sachverhalt ergibt sich insbesondere aus einer Zusammenschau der Figuren 4 bis 9.

Im gezeigten Ausführungsbeispiel ist das Deckelteil 8 kreisförmig ausgebildet und besteht aus einem transparenten Kunststoffmaterial. Das Deckelteil 8 liegt in Verschlussstellung des Gehäusedeckels 7 auf dem Rand der Beschickungsöffnung 12 auf. Dieser ist mit einer Dichtung 20 ausgerüstet, so dass ein fluiddichtes Anliegen des Deckelteils 8 gegeben ist.

Das Verschlussteil 9 ist im gezeigten Ausführungsbeispiel als Bajonettring ausgebildet, der unverlierbar am Deckelteil 8 angeordnet ist. Mit Bezug auf die Zeichnungsebene nach den Figuren 4 und 5 kann das Verschlussteil 9 relativ zum Deckelteil 8 verdreht werden, wobei das Verschlussteil 9 eine verriegelte Stellung gemäß Fig. 4 und eine entriegelte Stellung gemäß Fig. 5 einnehmen kann. Zur verwenderseitigen Einleitung einer Verdrehbewegung des Verschlussteils 9 ist diese mit einer Handhabe 10 ausgerüstet. Wie eine Zusammenschau der Figuren 2, 4 und 5 erkennen lässt, ist das Deckelteil 8 mit einer Schloss-Symbolik ausgerüstet, die den Verwender anhand der Stellung der Handhabe 10 erkennen lässt, ob sich das Verschlussteil 9 und damit der Gehäusedeckel 7 in verriegelter oder entriegelter Stellung befindet.

Das Verschlussteil 9 verfügt über Verschlusselemente 16, die mit am Gehäuse 11 angeordneten Verschlussnocken 17 zusammenwirken, und zwar jeweils nach Art eines Bajonettverschlusses. Es ist so erreicht, dass bei einer Überführung des Verschlussteils 9 aus der entriegelten Stellung in die verriegelte Stellung das unverlierbar am Verschlussteil 9 angeordnete Deckelteil 8 gegen die vom Gehäuse 11 bereitgestellte Dichtung 18 gepresst wird. Dies sorgt für einen sicheren fluiddichten Verschluss der Beschickungsöffnung 12. Die Bajonettverbindung stellt zudem sicher, dass sich der Verschlussteil 9 nicht ungewollte beispielsweise durch Verruckelungen infolge mechanischer Krafteinwirkungen lösen kann.

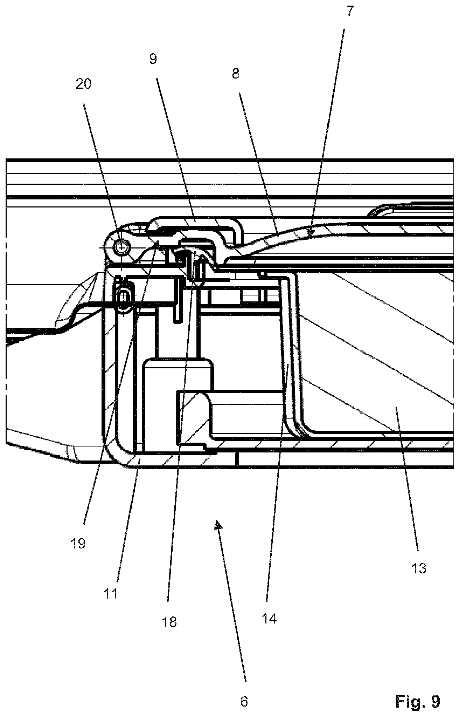

Wie insbesondere die Darstellung nach Fig. 9 erkennen lässt, ist der Gehäusedeckel 7 scharniert am Gehäuse 11 angeordnet. Er kann um die vom Scharnier bereitgestellte Drehachse 20 rotatorisch verschwenkt werden. Die Anscharnierung des Gehäusedeckels 7 an das Gehäuse 11 erfolgt über den Deckelteil 8, wie dies ebenfalls Fig. 9 zu entnehmen ist.

Der Gehäusedeckel 7 kann aufgrund seiner Anscharnierung in eine Offenstellung verschwenkt werden, wie dies in Fig. 3 gezeigt ist, oder in eine Verschlussstellung, wie sie beispielsweise aus Fig. 2 erkennbar ist.

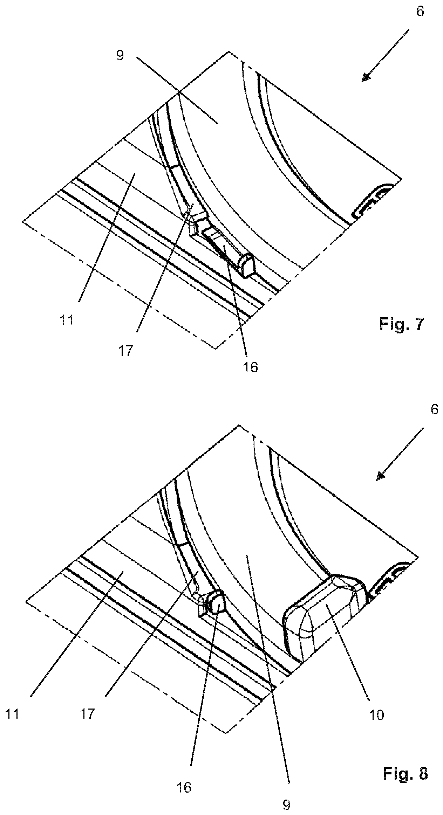

In Verschlussstellung des Gehäusedeckels 7 kann das Verschlussteil 9 aus seiner entriegelten Stellung beispielsweise nach Fig. 5 oder 7 in seine verriegelte Stellung beispielsweise nach Fig. 4 oder 8 verbracht werden. In dieser verriegelten Stellung liegt das Deckelteil 8 unter Zwischenordnung der Dichtung 18 fluiddicht an der die Beschickungsöffnung umgebenden Randkante an, was zu einem fluiddichten Verschließen der Beschickungsöffnung 12 führt.

Für ein verliersicheres Anordnen des Verschlussteils 9 am Deckel 8 verfügt das Deckelteil 8 über eine umlaufende Nut, wie dies beispielhaft in Fig. 9 anhand des Endabschnitts 19 des Deckelteils 8 zu erkennen ist. Für eine zuverlässige Abdichtung ist die Dichtung 18 zweilippig ausgebildet, wobei jede Lippe einem Schenkel der umlaufenden Nut zugeordnet ist.

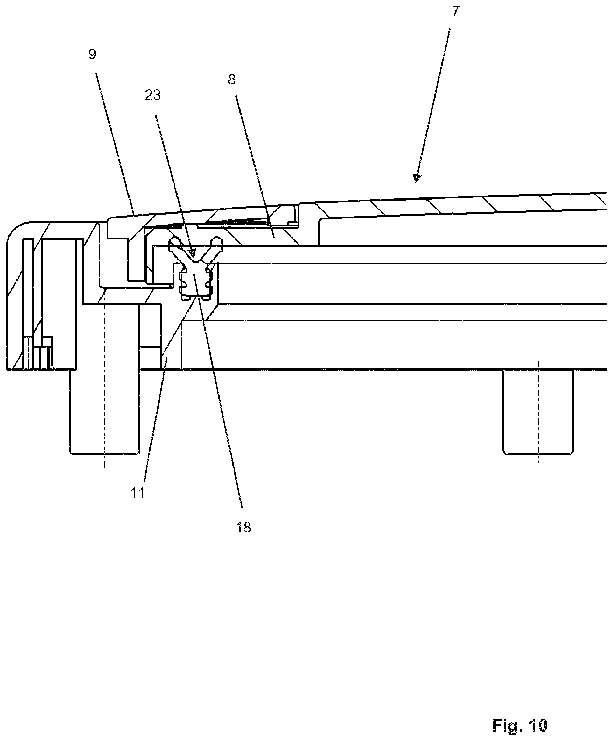

Eine Alternative zu der in Fig. 9 gezeigten Ausführungsform zeigt Fig. 10. Hierbei ist die vom Gehäuse 11 bereitgestellte Dichtung 18, gegen die das Deckelteil 8 bei verriegelter Stellung des Verschlussteils 9 zum fluiddichten Verschließen der Beschickungsöffnung 12 gepresst wird, zwar ebenfalls zweilippig bzw. zweispurig ausgebildet. Dabei ist die Dichtung 18 jedoch Y-artig geformt, so dass zwischen den beiden dem Deckelteil 8 zugewandten Dichtlippen eine Dichtungsrinne 23 ausgebildet wird. Hierdurch wird eine weiter verbesserte Abdichtung erzielt mit verbesserte Dichtwirkung bei Verschmutzung, da Partikel, die auf die Dichtspur fallen in die Rinne abrutschen können, und mit größerer Langzeitstabilität. Fig. 10 zeigt die Dichtung 18 auschnittsweiswe nochmals einzeln in schematischer Schnittdarstellung.

### Bezugszeichenliste

- 1: Spülraumtür
- 2: Innenseite
- 3: Kombinationsgerät
- 4: Klarspülmittelbevorratung
- 5: Vorratsbehälter
- 6: Dosiergerät
- 7: Gehäusedeckel
- 8: Deckelteil
- 9: Verschlussteil
- 10: Handhabe
- 11: Gehäuse
- 12: Beschickungsöffnung
- 13: Vorratsbehälter
- 14: Trageinheit
- 15: Achsfortsatz
- 16: Verschlusselement
- 17: Verschlussnocken
- 18: Dichtung
- 19: Endabschnitt
- 20: Drehachse
- 21: Dosierauslass
- 22: Abdeckung
- 23: Dichtungsrinne
- 100: Geschirrspülmaschine
- 101: Gehäuse
- 102: Spülbehälter
- 103: Spülraum
- 104: Beladeöffnung
- 105: Sprüheinrichtung
- 106: Sprüharm
- 107: Sprüharm

## Patentansprüche

1. Dosiergerät für das dosierte Einbringen eines schüttfähigen Reinigungsmittels in einen Behandlungsraum eines programmgesteuerten Reinigungsgeräts, insbesondere einer Geschirrspülmaschine, mit einem eine Beschickungsöffnung (12) aufweisenden Gehäuse (11), einer im Gehäuse (11) verdrehbar angeordneten und über die Beschickungsöffnung (12) zugänglichen Trageinheit (14), die der auswechselbaren Aufnahme eines für die Beherbergung des Reinigungsmittels vorgesehenen Vorratsbehälters (13) dient, und mit einem Gehäusedeckel (7) zum fluiddichten Verschließen der Beschickungsöffnung (12),
**dadurch gekennzeichnet,**
**dass** der Gehäusedeckel (7) ein das fluiddichte Verschließen der Beschickungsöffnung (12) besorgendes Deckelteil (8) und ein bewegbar am Deckelteil (8) angeordnetes Verschlussteil (9) aufweist, wobei das Verschlussteil (9) mit einer Mehrzahl von Verschlusselementen (16) ausgerüstet ist, die jeweils mit einem am Gehäuse (11) angeordneten Verschlussnocken (17) zusammenwirken.

2. Dosiergerät nach Anspruch 1, **dadurch gekennzeichnet, dass** der Gehäusedeckel (7) scharniert ausgebildet ist.

3. Dosiergerät nach Anspruch 1 oder 2, **dadurch gekennzeichnet, dass** das Deckelteil (8) kreisförmig ausgebildet ist.

4. Dosiergerät nach einem der vorhergehenden Ansprüche, **dadurch gekennzeichnet, dass** das Verschlussteil (9) verdrehbar am Deckelteil (8) angeordnet ist.

5. Dosiergerät nach einem der vorhergehenden Ansprüche, **dadurch gekennzeichnet, dass** das Verschlussteil (9) ringförmig ausgebildet ist.

6. Dosiergerät nach Anspruch 5, **dadurch gekennzeichnet, dass** das Verschlussteil (9) das Deckelteil (8) ringartig umschließt.

7. Dosiergerät nach einem der vorhergehenden Ansprüche, **dadurch gekennzeichnet, dass** das Deckelteil (8) zumindest teilweise transparent oder semitransparent ausgebildet ist.

8. Dosiergerät nach einem der vorhergehenden Ansprüche, **dadurch gekennzeichnet, dass** das Deckelteil (8) aus Kunststoff besteht.

9. Dosiergerät nach einem der vorhergehenden Ansprüche, **dadurch gekennzeichnet, dass** das Deckelteil (8) mit einer am Gehäuse (11) angeordneten Dichtung (18) zusammenwirkt.

10. Dosiergerät nach dem vorhergehenden Anspruch, **dadurch gekennzeichnet, dass** die Dichtung (18) zweilippig, insbesondere in Form eines Y, ausgebildet ist.

11. Dosiergerät nach einem der vorhergehenden Ansprüche, **dadurch gekennzeichnet, dass** zumindest eine der Verschlusselement-Verschlussnocken-Anordnungen einen Bajonettverschluss ausbildet.

## Claims

1. Metering apparatus for metered introduction of a bulk cleaning agent into a processing chamber of a programme-controlled cleaning appliance, in particular a dishwasher, comprising a housing (11) which has a loading opening (12), a supporting unit (14) which is rotatably arranged in the housing (11), is accessible via the loading opening (12) and is intended to exchangeably receive a storage container (13) that is provided for accommodating the cleaning agent, and comprising a housing lid (7) for closing the loading opening (12) in a fluid-tight manner,
**characterised in that**
the housing lid (7) comprises a lid part (8) which provides the fluid-tight closure of the loading opening (12), and a locking part (9) which is movably arranged on the lid part (8), the locking part (9) being fitted with a plurality of locking elements (16), each of which interacts with a locking cam (17) arranged on the housing (11).

2. Metering apparatus according to claim 1, **characterised in that** the housing lid (7) is hinged.

3. Metering apparatus according to either claim 1 or claim 2, **characterised in that** the lid part (8) is circular.

4. Metering apparatus according to any of the preceding claims, **characterised in that** the locking part (9) is rotatably arranged on the lid part (8).

5. Metering apparatus according to any of the preceding claims, **characterised in that** the locking part (9) is annular.

6. Metering apparatus according to claim 5, **characterised in that** the locking part (9) annularly surrounds the lid part (8).

7. Metering apparatus according to any of the preceding claims, **characterised in that** the lid part (8) is transparent or semi transparent at least in part.

8. Metering apparatus according to any of the preceding claims, **characterised in that** the lid part (8) consists of plastics material.

9. Metering apparatus according to any of the preceding claims, **characterised in that** the lid part (8) interacts with a seal (18) arranged on the housing (11).

10. Metering apparatus according to the preceding claim, **characterised in that** the seal (18) is double-lipped, in particular Y-shaped.

11. Metering apparatus according to any of the preceding claims, **characterised in that** at least one of the locking-element-locking-cam arrangements forms a bayonet fitting.

## Revendications

1. Appareil de dosage pour l'introduction dosée d'un détergent, pouvant être déversé, dans un espace de traitement d'un appareil de nettoyage commandé par programme, en particulier d'un lave-vaisselle, avec un boîtier (11) présentant une ouverture de chargement (12), avec une unité de support (14), disposée de façon rotative dans le boîtier (11) et accessible via l'ouverture de chargement (12), qui sert à loger de façon remplaçable un réservoir de stockage (13) prévu pour contenir le détergent, et avec un couvercle de boîtier (7) destiné à l'obturation étanche aux fluides de l'ouverture de chargement (12),
**caractérisé en ce que**
le couvercle de boîtier (7) présente une partie de couvercle (8) assurant l'obturation étanche aux fluides de l'ouverture de chargement (12), et une partie d'obturation (9) disposée de façon mobile sur la partie de couvercle (8), dans lequel la partie d'obturation (9) est équipée d'une pluralité d'éléments d'obturation (16) qui coopèrent respectivement avec une came d'obturation (17) disposée sur le boîtier (11).

2. Appareil de dosage selon la revendication 1, **caractérisé en ce que** le couvercle de boîtier (7) est constitué avec charnière.

3. Appareil de dosage selon la revendication 1 ou 2, **caractérisé en ce que** la partie de couvercle (8) est constituée en forme de cercle.

4. Appareil de dosage selon l'une des revendications précédentes, **caractérisé en ce que** la partie d'obturation (9) est disposée de façon rotative sur la partie de couvercle (8).

5. Appareil de dosage selon l'une des revendications précédentes, **caractérisé en ce que** la partie d'obturation (9) est constituée en forme d'anneau.

6. Appareil de dosage selon la revendication 5, **caractérisé en ce que** la partie d'obturation (9) entoure la partie de couvercle (8) de façon annulaire.

7. Appareil de dosage selon l'une des revendications précédentes, **caractérisé en ce que** la partie de couvercle (8) est constituée au moins partiellement de façon transparente ou semi-transparente.

8. Appareil de dosage selon l'une des revendications précédentes, **caractérisé en ce que** la partie de couvercle (8) est composée de matière plastique.

9. Appareil de dosage selon l'une des revendications précédentes, **caractérisé en ce que** la partie de couvercle (8) coopère avec un joint d'étanchéité (18) disposé sur le boîtier (11).

10. Appareil de dosage selon la revendication précédente, **caractérisé en ce que** le joint d'étanchéité (18) est constitué avec deux lèvres, en particulier en forme de Y.

11. Appareil de dosage selon l'une des revendications précédentes, **caractérisé en ce qu'**au moins un des agencements élément d'obturation-came d'obturation constitue une obturation à baïonnette.
